# EUROPÄISCHE PATENTSCHRIFT

(11) **EP 3 049 684 B1**
(45) Veröffentlichungstag und Bekanntmachung des Hinweises auf die Patenterteilung: **26.06.2019**
(21) Anmeldenummer: 14814742.4
(22) Anmeldetag: 23.09.2014
(51) Int. Cl.: F16D 13/58, F16D 3/12

(54) **DECKELANORDNUNG FÜR EINE REIBUNGSKUPPLUNG**
COVER ARRANGEMENT FOR A FRICTION CLUTCH
DISPOSITIF DE COUVERCLE POUR UN EMBRAYAGE À FRICTION

(30) Priorität: 26.09.2013 DE 102013219423
(43) Veröffentlichungstag der Anmeldung: 03.08.2016
(73) Patentinhaber: Schaeffler Technologies AG & Co. KG, 91074 Herzogenaurach (DE)
(72) Erfinder: SCHNEIDER, Michael, 76534 Baden-Baden (DE); BULUT, Faruk, 77933 Lahr (DE); RANDAZZO, Luigi, 76133 Karlsruhe (DE); CASTREZANA, Guillermo, 72590 Puebla (MX)
(86) Internationale Anmeldenummer: PCT/DE2014/200496
(87) Internationale Veröffentlichungsnummer: WO 2015/043597

(56) Entgegenhaltungen:
- DE-A1- 3 427 370
- DE-A1-102011 105 989
- DE-B4- 10 080 929
- FR-A1- 2 277 272

## Beschreibung

Die Erfindung betrifft eine Deckelanordnung für eine Reibungskupplung gemäß dem Oberbegriff des Patentanspruchs 1. Insbesondere betrifft die Erfindung eine Deckelanordnung für eine Reibungskupplung, mit deren Hilfe eine Anpressplatte der Reibungskupplung verlagert werden kann, um eine mit einer Getriebeeingangswelle eines Kraftfahrzeuggetriebes verbundene Kupplungsscheibe zu verpressen.

Aus DE 40 13 186 A1 ist eine Deckelanordnung für eine Reibungskupplung bekannt, bei der ein Haltebolzen mit einem Kupplungsdeckel verbunden ist. Mit dem Haltebolzen ist motorseitig eine Stützscheibe verbunden, wobei zwischen der Stützscheibe und dem Kupplungsdeckel zwei ringförmige Kippringe angeordnet sind, zwischen denen ein Betätigungselement in Form einer als Tellerfeder mit Federzungen ausgestalteten Hebelfeder in axialer Richtung unbeweglich aber schwenkbar aufgenommen ist. An einem radial inneren Ende der Federzungen kann eine Betätigungskraft eingeleitet werden, wodurch die Tellerfeder an den Kippringen verschwenkt wird und eine Anpressplatte zum reibschlüssigen Verpressen einer Kupplungsscheibe zwischen der Anpressplatte und einer Gegenplatte zum Öffnen der Kupplung verlagert werden kann. Zusätzlich ist zu den Kippringen radial beabstandet ein Federelement vorgesehen, das an der Stützscheibe und an einem radial äußeren Bereich der Hebelfeder abgestützt ist, so dass durch die Federkraft des Federelements Biegelasten der Hebelfeder im radial äußeren Bereich abgebaut werden können. Der Haltebolzen ist durch eine Öffnung des Kupplungsdeckel soweit hindurch geführt, dass eine Verdickung des Haltebolzens mit einem größeren Außendurchmesser als der Innendurchmesser der Öffnung an dem Kupplungsdeckel anschlägt, wodurch der Haltebolzen außerhalb des Kupplungsdeckels in einer definierten Relativaxiallage mit dem Kupplungsdeckel fixiert werden kann und nach radial innen mit dem größeren Durchmesser absteht.

Aus DE 100 80 929 B4 ist eine Reibungskupplung mit einer Deckelanordnung bekannt, bei welcher ein als Tellerfeder ausgestaltetes Betätigungselement schwenkbar an einem Kupplungsdeckel abgestützt ist. Mit dem Kupplungsdeckel ist ein Distanzbolzen vernietet, der in axialer Richtung durch das Betätigungselement hindurchragt. Der Distanzbolzen ist gleichzeitig durch einen C-förmigen Clip hindurch geführt, wobei ein erster Schenkel des Clips zwischen dem Distanzbolzen und dem Kupplungsdeckel verklemmt ist. Von der Befestigungsstelle aus erstreckt sich der Clip mit seinem ersten Schenkel nach radial innen, wird dann um ca. 180° umgebogen und erstreckt sich zum Kupplungsdeckel axial beabstandet mit einem zweiten Schenkel nach radial außen, wobei ein Kopf des Distanzbolzens zwischen dem ersten Schenkel und dem zweiten Schenkel mit Vorspannung eingespannt ist. Der zweite Schenkel bildet eine zum Kupplungsdeckel weisende konvex ausgeführte Anlagefläche für das Betätigungselement aus, so dass das Betätigungselement mit Hilfe des Kupplungsdeckels einerseits und der Anlagefläche des Clips andererseits an beiden Axialseiten schwenkbar gelagert ist.

Aus der DE 10 2011 105 989 A1 ist eine Deckelanordnung für eine Reibungskupplung bekannt, die auf den Oberbegriff des Patentanspruchs 1 lesbar ist.

Es besteht ein ständiges Bedürfnis Bauraumanforderungen in Reibungskupplungen zu reduzieren.

Es ist die Aufgabe der Erfindung Maßnahmen aufzuzeigen, die geringe Bauraumanforderungen in einer Reibungskupplung ermöglichen.

Die Lösung der Aufgabe erfolgt erfindungsgemäß durch eine Deckelanordnung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Deckelanordnung für eine Reibungskupplung, insbesondere zum Kuppeln einer Antriebswelle eines Kraftfahrzeugmotors mit mindestens einer Getriebeeingangswelle eines Kraftfahrzeuggetriebes, vorgesehen mit einem Kupplungsdeckel zum zumindest teilweisen Abdecken einer Anpressplatte zum Verpressen einer Kupplungsscheibe, einem, insbesondere als Tellerfeder ausgestalteten, um einen Schwenkpunkt schwenkbaren Betätigungselement zum Verlagern der Anpressplatte und mindestens einem mit dem Kupplungsdeckel befestigten Haltehaken, wobei der Haltehaken ein flächig an dem Kupplungsdeckel anliegendes Befestigungsstück, ein sich an dem Befestigungsstück anschließendes und zumindest mit einem Anteil in axialer Richtung von dem Kupplungsdeckel weg verlaufenden Verbindungsstück und ein sich an dem Verbindungsstück anschließendes Haltestück zur schwenkbaren Lagerung des Betätigungselements aufweist.

Der Haltehaken kann im Querschnitt beispielsweise im Wesentlichen Z-förmig oder als insbesondere trapezförmige Stufe ausgestaltet sein, so dass das Befestigungsstück zwischen dem Kupplungsdeckel und dem Betätigungselement angeordnet sein kann, während das Haltestück an der von Kupplungsdeckel weg weisenden Axialseite des Betätigungselements angeordnet sein kann. Der Haltehaken kann hierbei den Kupplungsdeckel mit seinem Befestigungsstück flächig direkt kontaktieren, während gleichzeitig der Haltehaken mit seinem Haltestück das Betätigungselement mit Hilfe des Verbindungsstücks hintergreifen kann, um einen definierten in Umfangsrichtung geschlossenen Schwenkpunkt für das Betätigungselement zumindest teilweise auszubilden. Hierbei kann insbesondere ein Distanzbolzen eingespart werden, so dass der Haltehaken für das Hintergreifen des Betätigungselements nur einen besonders geringen Bauraumbedarf in axialer Richtung benötigt. Es ist auch nicht erforderlich den Haltehaken mit einem beispielsweise nach radial innen abstehenden C-förmigen Verlauf auszugestalten, so dass auch ein geringer Bauraumbedarf in radialer Richtung erreicht ist. Stattdessen kann der Haltehaken insbesondere durch Vernieten oder Verschrauben mit dem Kupplungsdeckel sicher verbunden werden. Hierbei kann der flächige Kontakt des Befestigungsstücks ein nachträgliches Verdrehen des Haltehakens relativ zum Kupplungsdeckel reibschlüssig sperren. Durch die geometrisch einfache Ausgestaltung des Haltehakens, die unnötige in radialer Richtung abstehende Teilstücke vermeidet, kann ein Distanzbolzen zur Befestigung des Haltehakens eingespart werden, so dass der Bauraumbedarf des Haltehakens in radialer und/oder axialer Richtung reduziert werden kann und geringe Bauraumanforderungen in der Reibungskupplung ermöglicht sind.

Der so gewonnene Bauraum kann beispielsweise dafür genutzt werden in dem Betätigungselement in axialer Richtung abstehende Versteifungssicken vorzusehen, wodurch ein besonders steifes Betätigungselement mit einem geringen Federanteil ausgebildet werden kann. Ferner kann der gewonnene Bauraum genutzt werden, um eine Kupplungsscheibe mit einem Schwingungsdämpfer, beispielsweise Scheibendämpfer und/oder Fliehkraftpendel, auszugestalten oder einen bestehenden Schwingungsdämpfer der Kupplungsscheibe größer zu dimensionieren, wodurch eine bessere Dämpfung von Drehungleichförmigkeiten des eingeleiteten Drehmoments erreicht werden kann. Der gewonnene Bauraum kann auch genutzt werden einen größeren Schwenkwinkel für das Betätigungselement vorzusehen, wodurch es möglich ist einen größeren Hubweg für die Anpressplatte und Reibbeläge mit einer größeren Verschleißreserve zu verwenden. Der Haltehaken kann insbesondere durch Ausstanzen und spanloses Umformen hergestellt werden. Insbesondere ist der Haltehaken frei von Hinterschneidungen, so dass besonders einfache und kostengünstige Umformtechniken angewendet werden können. Das Befestigungsstück, das Verbindungsstück und das Haltestück sind vorzugsweise einstückig ausgeführt. Vorzugsweise weist das Haltestück in Umfangsrichtung eine größere Erstreckung als das Befestigungsstück und/oder das Verbindungsstück auf. Insbesondere weist das Verbindungsstück und/oder das Haltestück eine versteifende Sicke auf. Insbesondere sind mehrere Haltehaken vorgesehen, die insbesondere in Umfangsrichtung gleichmäßig verteilt und/oder auf einem gemeinsamen Radius angeordnet sind. Das Betätigungselement kann insbesondere als Hebelfeder ausgestaltet sein, wobei das Betätigungselement vorzugsweise in der Art einer Tellerfeder ausgestaltet ist. Der Schwenkpunkt für das Betätigungselement kann an einer Axialseite durch das mindestens eine Haltestück und an der anderen Axialseite mittelbar, beispielsweise über einen Kippring, oder unmittelbar durch den Kupplungsdeckel definiert sein. Mit dem Kupplungsdeckel kann eine insbesondere als Blattfeder ausgestaltete Rückstellfeder verbunden sein, die mit der Anpressplatte verbunden sein kann, um die Anpressplatte automatisch in eine definierte Ausgangslage, die beispielsweise der geöffneten oder geschlossenen Stellung der Reibungskupplung entspricht, zu bewegen, wenn keine über das Betätigungselement in die Anpressplatte eingeleitete Betätigungskraft an der Anpressplatte angreift.

Die Haltestücke und/oder die Verbindungsstücke mehrerer Haltehaken sind in Umfangsrichtung miteinander verbunden. Die Bauteileanzahl kann dadurch verringert werden, wodurch insbesondere die Befestigung mehrere Haltehaken mit dem Kupplungsdeckel vereinfacht ist. Insbesondere kann durch die Verbindung der Haltehaken ein Verdrehen von einzelnen Haltehaken vermieden werden, so dass die miteinander verbundenen Haltehaken mit einer erhöhten Lagegenauigkeit montiert werden können.

Vorzugsweise sind die Haltestücke und/oder die Verbindungsstücke mehrerer Haltehaken Teil eines in Umfangsrichtung geschlossenen Halterings. Dadurch können sämtliche vorgesehenen Haltehaken durch einen einzigen insbesondere einstückigen Haltehakenring ausgestaltet werden. Durch den Haltering kann beispielsweise aber nicht notwendigerweise eine in Umfangsrichtung geschlossene das Betätigungselement kontaktierende Anlagefläche ausgebildet werden, die durch die insbesondere absatzlos in Umfangsrichtung ineinander übergehenden Haltestücke der mehreren Haltehaken bereitgestellt wird. Das Verbindungsstück und/oder das Befestigungsstück können von dem Haltering in radialer Richtung, insbesondere nach radial innen abstehen. Bei der Montage kann das Betätigungselement in den Kupplungsdeckel eingelegt werden und nachfolgend der Haltehakenring auf das Betätigungselement aufgesetzt werden, wobei die Befestigungsstücke bis zum Kupplungsdeckel reichen und dort mit dem Kupplungsdeckel beispielsweise durch Vernieten verbunden werden können.

In Umfangsrichtung nachfolgende Haltestücke verschiedener Haltehaken sind über ein im Wesentlichen in Umfangsrichtung verlaufendes Distanzstück miteinander verbunden, wobei das Distanzstück zumindest teilweise weiter weg als die Haltestücke zu dem Kupplungsdeckel in axialer Richtung beabstandet verläuft. Die Haltestücke und die Distanzstücke sind insbesondere Teil eines in Umfangsrichtung geschlossenen Halterings, so dass sämtliche vorgesehenen Haltehaken durch einen einzigen insbesondere einstückigen Haltehakenring ausgestaltet werden können. Durch den zum Kupplungsdeckel stärker beabstandeten Verlauf der Distanzstücke kann genügend Bauraum frei gelassen werden, damit das Betätigungselement mit in axialer Richtung abstehenden Versteifungssicken ausgestaltet werden kann. Die Versteifungssicken können an dem Distanzstück anliegen oder über einen Spalt zu dem Distanzstück beabstandet sein.

Insbesondere weist das Betätigungselement mindestens eine in axialer Richtung von dem Kupplungsdeckel weg abstehende Versteifungssicke auf, wobei die Versteifungssicke in Umfangsrichtung zwischen zwei in Umfangsrichtung nachfolgende Haltehaken positioniert ist. Durch die Versteifungssicke kann das Betätigungselement versteift werden und einen geringeren Federanteil aufweisen. Gleichzeitig kann sicher gestellt werden, dass die Versteifungssicke nicht an dem Befestigungsstück und/oder an dem Verbindungsstück anschlägt.

Vorzugsweise verläuft das Verbindungsstück von dem Befestigungsstück aus mit einem Anteil nach radial außen, wobei das Haltestück von dem Verbindungsstück aus im Wesentlichen nach radial außen verläuft. Der Haltehaken kann insbesondere durch eine geschlossene Öffnung oder zwischen zwei von einem Ringkörper des Betätigungselements nach radial innen abstehenden Federzungen hindurchragen und durch seine Erstreckung in radialer Richtung einen in diesem Umfangswinkelbereich vorgesehenes Teilstück des Betätigungselements hintergreifen.

Besonders bevorzugt weist das Betätigungselement einen in Umfangsrichtung geschlossenen Tellerfederring zur Ausbildung einer Tellerfeder auf, wobei von dem Tellerfederring nach radial innen Federzungen zur Einleitung einer Betätigungskraft abstehen, wobei das Verbindungsstück des Haltehakens zwischen zwei in Umfangsrichtung nachfolgende Federzungen in axialer Richtung hindurch ragt. Das Haltestück des Haltehakens kann insbesondere an einem radial inneren Bereich des Tellerfederrings angreifen. Der Tellerfederring kann in der Art einer Tellerfeder wirken, wodurch sich eine vergleichsweise steife Federkennlinie für das Betätigungselement realisieren lässt.

Insbesondere weist das Haltestück eine zum Betätigungselement weisende konvexe Anlagefläche auf. Dadurch lässt sich eine im Wesentlichen punktförmige beziehungsweise linienförmige Anlagefläche erreichen, die eine leichte Schwenkbarkeit des Betätigungselements an der Anlagefläche des Haltestücks ermöglicht.

Vorzugsweise ist das Betätigungselement mittelbar oder unmittelbar an dem Kupplungsdeckel schwenkbar gelagert. Der Kupplungsdeckel kann beispielsweise eine abstehende Ausprägung aufweisen, an der sich das Betätigungselement schwenkbar abstützen kann. Alternativ kann zwischen dem Kupplungsdeckel und dem Betätigungselement ein durch einen geschlossenen Drahtring ausgebildeter Kippring vorgesehen sein, der insbesondere in einer Einprägung des Kupplungsdeckels aufgenommen ist. Dadurch lässt sich an der zum Kupplungsdeckel weisenden Axialseite des Betätigungselements eine punktförmige beziehungsweise linienförmige Anlagefläche erreichen, die eine leichte Schwenkbarkeit des Betätigungselements an der Anlagefläche des Haltestücks ermöglicht.

Die Erfindung betrifft ferner eine Reibungskupplung zum Kuppeln einer Antriebswelle eines Kraftfahrzeugmotors mit mindestens einer Getriebeeingangswelle eines Kraftfahrzeuggetriebes mit einer Gegenplatte, einer Anpressplatte zum Verpressen einer Kupplungsscheibe zwischen der Gegenplatte und der Anpressplatte und einer Deckelanordnung, die wie vorstehend beschrieben aus- und weitergebildet sein kann, zum Verlagern der Anpressplatte relativ zur Gegenplatte. Durch die geometrisch einfache Ausgestaltung des Haltehakens der Deckelanordnung, die unnötige in radialer Richtung abstehende Teilstücke vermeidet, kann ein Distanzbolzen zur Befestigung des Haltehakens eingespart werden, so dass der Bauraumbedarf des Haltehakens in radialer und/oder axialer Richtung reduziert werden kann und geringe Bauraumanforderungen in der Reibungskupplung ermöglicht sind.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Draufsicht auf einen Haltehaken,
- Fig. 2:: eine schematische Seitenansicht des Haltehakens aus Fig. 1,
- Fig. 3:: eine schematische perspektivische Ansicht eines Haltehakenrings mit mehren Haltehaken aus Fig. 1 und
- Fig. 4:: eine schematische perspektivische Ansicht einer Deckelanordnung mit dem Haltehakenring aus Fig. 3.

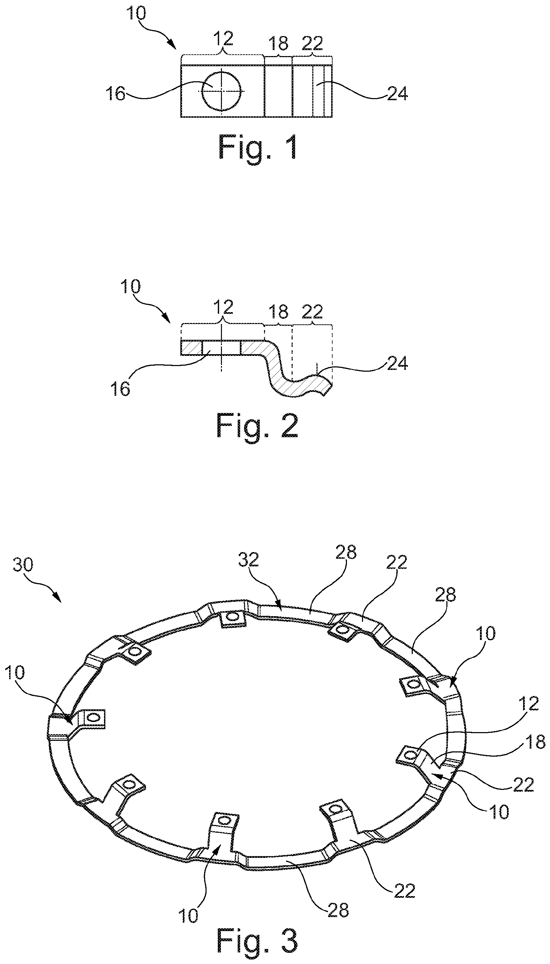

Der in Fig. 1 und Fig. 2 dargestellte Haltehaken 10 weist ein Befestigungsstück 12 auf, das flach an einem Kupplungsdeckel 14 anliegen kann und über eine in dem Befestigungsstück 12 vorgesehene Befestigungsöffnung 16 mit dem Kupplungsdeckel 14 vernietet werden kann. An dem Befestigungsstück 12 schließt sich ein Verbindungsstück 18 an, das im eingebauten Zustand in einer Deckelanordnung 20 einer Reibungskupplung nach radial außen und in axialer Richtung von dem Kupplungsdeckel 14 weg verlaufen kann. An das Verbindungsstück 18 schließt sich ein Haltestück 22 an, dass mit einer konvex ausgeführten Anlagefläche 24 ein Betätigungselement 26 zum Verlagern einer Anpressplatte der Reibungskupplung hintergreifen und das Betätigungselement 26 an einer von dem Kupplungsdeckel 14 weg weisenden Axialseite schwenkbar lagern kann.

Wie in Fig. 3 dargestellt können mehrere Haltehaken 10 über in Umfangsrichtung verlaufende Distanzstücke 28 miteinander verbunden werden, so dass sämtliche Haltehaken 10 in einem gemeinsamen einstückigen Haltehakenring 30 zusammengefasst sein können. Der Haltehakenring 30 weist einen in Umfangsrichtung geschlossenen Haltering 32 auf, der im dargestellten Ausführungsbeispiel durch die Distanzstücke 28 und die Haltestücke 22 der verschiedenen Haltehaken 10 einstückig zusammengesetzt ist. Die jeweiligen Befestigungsstücke 12 der Haltehaken 10 stehen über die jeweils zugeordneten Verbindungsstücke 18 von dem Haltering 32 nach radial innen ab. Die Distanzstücke 28 und die Haltestücke 22 können grundsätzlich in einer gemeinsamen Ebene angeordnet sein und dadurch den gleichen Abstand zum Kupplungsdeckel 14 aufweisen. Dadurch kann insbesondere auch das Distanzstück 28 die Anlagefläche 28 ausbilden. Im dargestellten Ausführungsbeispiel sind die Distanzstücke 28 zu den Haltestücken 22 in axialer Richtung versetzt angeordnet.

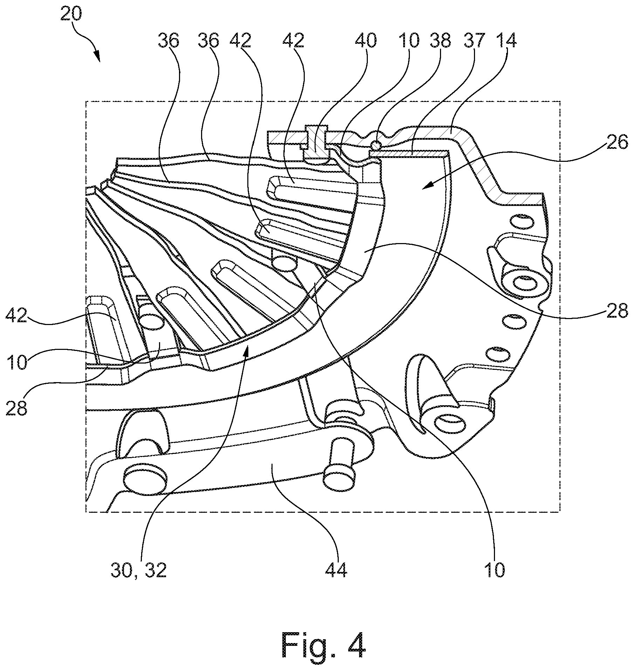

Bei der in Fig. 4 dargestellten Deckelanordnung 20 ist das Betätigungselement 26 in der Art einer Tellerfeder ausgestaltet und weist einen Tellerfederring 34 auf, von dem nach radial innen Federzungen 36 abstehen. Der Tellerfederring 34 ist an einem radial inneren Bereich von der Anlagefläche 24 des Haltestücks 22 des Haltehakens 10 und einem an dem Kupplungsdeckel 14 abgestützten Kippring 38 schwenkbar gelagert. An einem radial äußeren Bereich des Tellerfederrings kann das Betätigungselement 26 an der Anpressplatte der Reibungskupplung angreifen und eine über die Federzungen 36 von einem insbesondere hydraulischen Betätigungssystem eingeleite Betätigungskraft übertragen. Die jeweiligen Haltehaken 10 sind jeweils über ein Niet 40 mit dem Kupplungsdeckel 14 verbunden und verlaufen zwischen zwei in Umfangsrichtung nachfolgende Federzungen 36 in axialer Richtung hindurch, um das Betätigungselement 26 im Bereich des Tellerfederrings 34 zu hintergreifen und über die Anlagefläche 24 des Haltestücks 22 schwenkbar zu lagern. Gegebenenfalls kann der Niet 40 für eine Zentrierung des Betätigungselements 26 an dem Kupplungsdeckel 14 verwendet werden, wobei insbesondere der Niet 40 im unbelasteten Zustand des Betätigungselements 26, wenn keine Betätigungskraft in das Betätigungselement 26 eingeleitet wird, sich in axialer Richtung nur bis zu einem axialen Niveau der Federzungen 36 erstreckt und nicht im Vergleich zu den Federzungen 36 in einer von dem Kupplungsdeckel 14 weg weisenden axialen Richtung hervorsteht. Im dargestellten Ausführungsbeispiel weist das Betätigungselement 26 radial verlaufende Versteifungssicken 42 auf, die sich über den Tellerfederring 34 und/oder die Federzungen 36 erstrecken können. Die Versteifungssicken 42 stehen in einer von dem Kupplungsdeckel 14 weg weisenden Richtung ab. Dadurch, dass die Distanzstücke 28 im Haltering 32 des Haltehakenrings 30 in einer von dem Kupplungsdeckel 14 weg weisenden Richtung zu dem Haltestück 22 beabstandet verlaufen, ist durch die geometrische Ausgestaltung des Halterings 32 des Haltehakenrings 30 ausreichend Bauraum für die Versteifungssicken 42 vorgehalten, so dass insbesondere die Distanzstücke 28 über einen Spalt beabstandet zu den Versteifungssicken 42 verlaufen können ohne bei einem Verschwenken des Betätigungselements 26 an den Versteifungssicken 42 anzuschlagen. Mit dem Kupplungsdeckel 14 ist ferner eine als Blattfeder ausgestaltete Rückstellfeder 44 vernietet, die mit der Anpressplatte der Reibungskupplung verbunden sein kann, um die Anpressplatte automatisch in eine definierte axiale Relativlage zu positionieren, wenn keine Betätigungskraft an der Anpressplatte angreift.

### Bezugszeichenliste

- 10: Haltehaken
- 12: Befestigungsstück
- 14: Kupplungsdeckel
- 16: Befestigungsöffnung
- 18: Verbindungsstück
- 20: Deckelanordnung
- 22: Haltestück
- 24: Anlagefläche
- 26: Betätigungselement
- 28: Distanzstück
- 30: Haltehakenring
- 32: Haltering
- 34: Tellerfederring
- 36: Federzunge
- 38: Kippring
- 40: Niet
- 42: Versteifungssicken
- 44: Rückstellfeder

## Patentansprüche

1. Deckelanordnung für eine Reibungskupplung, insbesondere zum Kuppeln einer Antriebswelle eines Kraftfahrzeugmotors mit mindestens einer Getriebeeingangswelle eines Kraftfahrzeuggetriebes, mit
einem Kupplungsdeckel (14) zum zumindest teilweisen Abdecken einer Anpressplatte zum Verpressen einer Kupplungsscheibe,
einem, insbesondere als Tellerfeder ausgestalteten, um einen Schwenkpunkt schwenkbaren Betätigungselement (26) zum Verlagern der Anpressplatte und mindestens einem mit dem Kupplungsdeckel (14) befestigten Haltehaken (10), wobei der Haltehaken (10) ein flächig an dem Kupplungsdeckel (14) anliegendes Befestigungsstück (12), ein sich an dem Befestigungsstück (12) anschließendes und zumindest mit einem Anteil in axialer Richtung von dem Kupplungsdeckel (14) weg verlaufenden Verbindungsstück (18) und ein sich an dem Verbindungsstück (18) anschließendes Haltestück (22) zur schwenkbaren Lagerung des Betätigungselements (26) aufweist, wobei die Haltestücke (22) und/oder die Verbindungsstücke (18) mehrerer Haltehaken (10) in Umfangsrichtung miteinander verbunden sind, **dadurch gekennzeichnet, dass** in Umfangsrichtung nachfolgende Haltestücke (22) verschiedener Haltehaken (10) über ein im Wesentlichen in Umfangsrichtung verlaufendes Distanzstück (28) miteinander verbunden sind, wobei das Distanzstück (28) zumindest teilweise stärker als die Haltestücke (22) zu dem Kupplungsdeckel (14) in axialer Richtung beabstandet verläuft.

2. Deckelanordnung nach Anspruch 1, **dadurch gekennzeichnet, dass** die Haltestücke (22) und/oder die Verbindungsstücke (18) mehrerer Haltehaken (10) Teil eines in Umfangsrichtung geschlossenen Halterings (30) sind.

3. Deckelanordnung nach Anspruch 1 oder 2, **dadurch gekennzeichnet, dass** das Betätigungselement (26) mindestens eine in axialer Richtung von dem Kupplungsdeckel (14) weg abstehende Versteifungssicke (42) aufweist, wobei die Versteifungssicke (42) in Umfangsrichtung zwischen zwei in Umfangsrichtung nachfolgende Haltehaken (10) positioniert ist.

4. Deckelanordnung nach einem der Ansprüche 1 bis 3, **dadurch gekennzeichnet, dass** das Verbindungsstück (18) von dem Befestigungsstück (12) aus mit einem Anteil nach radial außen verläuft, wobei das Haltestück (22) von dem Verbindungsstück (18) aus im Wesentlichen nach radial außen verläuft.

5. Deckelanordnung nach einem der Ansprüche 1 bis 4, **dadurch gekennzeichnet, dass** das Betätigungselement (26) einen in Umfangsrichtung geschlossenen Tellerfederring (34) zur Ausbildung einer Tellerfeder aufweist, wobei von dem Tellerfederring (34) nach radial innen Federzungen (36) zur Einleitung einer Betätigungskraft abstehen, wobei das Verbindungsstück (18) des Haltehakens (10) zwischen zwei in Umfangsrichtung nachfolgende Federzungen (36) in axialer Richtung hindurch ragt.

6. Deckelanordnung nach einem der Ansprüche 1 bis 5, **dadurch gekennzeichnet, dass** das Haltestück (22) eine zum Betätigungselement (26) weisende konvexe Anlagefläche (24) aufweist.

7. Deckelanordnung nach einem der Ansprüche 1 bis 6, **dadurch gekennzeichnet, dass** das Betätigungselement (26) mittelbar oder unmittelbar an dem Kupplungsdeckel (14) schwenkbar gelagert ist.

8. Reibungskupplung zum Kuppeln einer Antriebswelle eines Kraftfahrzeugmotors mit mindestens einer Getriebeeingangswelle eines Kraftfahrzeuggetriebes, mit einer Gegenplatte, einer Anpressplatte zum Verpressen einer Kupplungsscheibe zwischen der Gegenplatte und der Anpressplatte und einer Deckelanordnung (20) nach einem der Ansprüche 1 bis 7 zum Verlagern der Anpressplatte relativ zur Gegenplatte.

## Claims

1. Cover arrangement for a friction clutch, in particular for coupling a drive shaft of a motor vehicle engine to at least one transmission input shaft of a motor vehicle transmission, having
a clutch cover (14) for at least partially covering a pressure plate for pressing a clutch disc,
an actuating element (26) which is configured, in particular, as a cup spring and can be pivoted about a pivot point for moving the pressure plate, and
at least one retaining hook (10) which is fastened to the clutch cover (14),
the retaining hook (10) having a fastening piece (12) which bears flatly against the clutch cover (14), a connecting piece (18) which adjoins the fastening piece (12) and at least one part of which runs away from the clutch cover (14) in the axial direction, and a retaining piece (22) which adjoins the connecting piece (18) for pivotably mounting the actuating element (26), the retaining pieces (22) and/or the connecting pieces (18) of a plurality of retaining hooks (10) being connected to one another in the circumferential direction, **characterized in that** retaining pieces (22) of different retaining hooks (10), which retaining pieces (22) follow one another in the circumferential direction, are connected to one another via a spacer piece (28) which runs substantially in the circumferential direction, the spacer piece (28) running spaced apart in the axial direction from the clutch cover (14) at least partially to a greater extent than the retaining pieces (22).

2. Cover arrangement according to Claim 1, **characterized in that** the retaining pieces (22) and/or the connecting pieces (18) of a plurality of retaining hooks (10) are part of a retaining ring (30) which is closed in the circumferential direction.

3. Cover arrangement according to Claim 1 or 2, **characterized in that** the actuating element (26) has at least one reinforcing bead (42) which projects away from the clutch cover (14) in the axial direction, the reinforcing bead (42) being positioned in the circumferential direction between two retaining hooks (10) which follow one another in the circumferential direction.

4. Cover arrangement according to one of Claims 1 to 3, **characterized in that** a portion of the connecting piece (18) runs radially to the outside from the fastening piece (12), the retaining piece (22) running substantially radially to the outside from the connecting piece (18).

5. Cover arrangement according to one of Claims 1 to 4, **characterized in that** the actuating element (26) has a cup spring ring (34) which is closed in the circumferential direction for configuring a cup spring, spring tongues (36) for introducing an actuating force projecting radially to the inside from the cup spring ring (34), the connecting piece (18) of the retaining hook (10) protruding in the axial direction between two spring tongues (36) which follow one another in the circumferential direction.

6. Cover arrangement according to one of Claims 1 to 5, **characterized in that** the retaining piece (22) has a convex bearing face (24) which points towards the actuating element (26).

7. Cover arrangement according to one of Claims 1 to 6, **characterized in that** the actuating element (26) is pivotably mounted indirectly or directly on the clutch cover (14).

8. Friction clutch for coupling a drive shaft of a motor vehicle engine to at least one transmission input shaft of a motor vehicle transmission, having a counter-plate, a pressure plate for pressing a clutch disc between the counter-plate and the pressure plate, and a cover arrangement (20) according to one of Claims 1 to 7 for moving the pressure plate relative to the counter-plate.

## Revendications

1. Agencement de couvercle pour un embrayage à friction, en particulier pour l'accouplement d'un arbre d'entraînement d'un moteur de véhicule automobile à au moins un arbre d'entrée de boîte de vitesses d'une boîte de vitesses de véhicule automobile, comprenant
un couvercle d'embrayage (14) pour recouvrir au moins en partie un plateau de pression destiné à presser un disque d'embrayage,
un élément d'actionnement (26) réalisé notamment sous forme de ressort Belleville, pouvant pivoter autour d'un pivot, pour déplacer le plateau de pression, et au moins un crochet de retenue (10) fixé au couvercle d'embrayage (14),
le crochet de retenue (10) présentant une pièce de fixation (12) s'appliquant à plat contre le couvercle d'embrayage (14), une pièce de connexion (18) se raccordant à la pièce de fixation (12) et s'étendant au moins avec une partie dans la direction axiale à l'écart du couvercle d'embrayage (14) et une pièce de retenue (22) se raccordant à la pièce de connexion (18) pour le support pivotant de l'élément d'actionnement (26), les pièces de retenue (22) et/ou les pièces de connexion (18) de plusieurs crochets de retenue (10) étant raccordées les unes aux autres dans la direction périphérique, **caractérisé en ce que** des pièces de retenue (22) de différents crochets de retenue (10) se suivant dans la direction périphérique sont raccordées les unes aux autres par le biais d'une pièce d'espacement (28) s'étendant essentiellement dans la direction périphérique, la pièce d'espacement (28) s'étendant au moins en partie plus fortement à distance dans la direction axiale par rapport au couvercle d'embrayage (14) que les pièces de retenue (22).

2. Agencement de couvercle selon la revendication 1, **caractérisé en ce que** les pièces de retenue (22) et/ou les pièces de connexion (18) de plusieurs crochets de retenue (10) font partie d'une bague de retenue (30) fermée dans la direction périphérique.

3. Agencement de couvercle selon la revendication 1 ou 2, **caractérisé en ce que** l'élément d'actionnement (26) présente au moins une moulure de renforcement (42) faisant saillie dans la direction axiale à l'écart du couvercle d'embrayage (14), la moulure de renforcement (42) étant positionnée dans la direction périphérique entre deux crochets de retenue (10) se suivant dans la direction périphérique.

4. Agencement de couvercle selon l'une quelconque des revendications 1 à 3, **caractérisé en ce que** la pièce de connexion (18) s'étend radialement vers l'extérieur par une partie depuis la pièce de fixation (12), la pièce de retenue (22) s'étendant essentiellement radialement vers l'extérieur depuis la pièce de connexion (18).

5. Agencement de couvercle selon l'une quelconque des revendications 1 à 4, **caractérisé en ce que** l'élément d'actionnement (26) présente une bague de ressort Belleville (34) fermée dans la direction périphérique pour réaliser un ressort Belleville, des langues de ressort (36) faisant saillie radialement vers l'intérieur depuis la bague de ressort Belleville (34) pour l'introduction d'une force d'actionnement, la pièce de connexion (18) du crochet de retenue (10) faisant saillie dans la direction axiale entre deux langues de ressort se suivant dans la direction périphérique (36).

6. Agencement de couvercle selon l'une quelconque des revendications 1 à 5, **caractérisé en ce que** la pièce de retenue (22) présente une surface d'appui convexe (24) tournée vers l'élément d'actionnement (26) .

7. Agencement de couvercle selon l'une quelconque des revendications 1 à 6, **caractérisé en ce que** l'élément d'actionnement (26) est supporté directement ou indirectement de manière à pouvoir pivoter sur le couvercle d'embrayage (14).

8. Embrayage à friction pour l'accouplement d'un arbre d'entraînement d'un moteur de véhicule automobile à au moins un arbre d'entrée de boîte de vitesses d'une boîte de vitesses de véhicule automobile, comprenant un plateau conjugué, un plateau de pression destiné à presser un disque d'embrayage entre le plateau conjugué et le plateau de pression et un agencement de couvercle (20) selon l'une quelconque des revendications 1 à 7 pour le déplacement du plateau de pression par rapport au plateau conjugué.
